# EUROPÄISCHE PATENTSCHRIFT

(11) **EP 3 782 172 B1**
(45) Veröffentlichungstag und Bekanntmachung des Hinweises auf die Patenterteilung: **24.01.2024**
(21) Anmeldenummer: 20707094.7
(22) Anmeldetag: 25.02.2020
(51) Int. Cl.: H01C 1/014, H01C 1/14, H01C 1/144, H01G 2/18, H01G 4/248, H01C 7/02, H01C 7/04, H01C 7/102, H01G 4/12

(54) **THERMISTOR-, VARISTOR- ODER KONDENSATOR-BAUELEMENT MIT SCHMELZBAREM VERBINDUNGSELEMENT ZWISCHEN DEM GRUNDKÖRPER DES BAUELEMENTS UND EINER AUSSENELEKTRODE**
THERMISTOR, VARISTOR OR CAPACITOR ELEMENT WITH MELTABLE CONNECTION BETWEEN BODY OF THE DEVICE AND A TERMINAL
THERMISTANCE, VARISTANCE OU CONDENSATEUR AVEC CONNECTION FUSIBLE ENTRE CORPS DU DISPOSITIF ET BORNE

(30) Priorität: 18.04.2019 DE 102019110374
(43) Veröffentlichungstag der Anmeldung: 24.02.2021
(73) Patentinhaber: TDK Electronics AG, 81671 München (DE)
(72) Erfinder: HOFRICHTER, Alfred, 8230 Hartberg (AT); RINNER, Franz, 8523 Frauental (AT)
(74) Vertreter: Epping - Hermann - Fischer
(86) Internationale Anmeldenummer: PCT/EP2020/054914
(87) Internationale Veröffentlichungsnummer: WO 2020/211997

(56) Entgegenhaltungen:
- DE-A1-102015 102 866
- US-A- 5 221 038
- US-A1- 2009 102 599

## Beschreibung

Anwendungen, bei denen an ein Bauelement eine relativ hohe spezifische Leistung angelegt wird, können zu einer inhomogenen oder asymmetrischen Temperaturaufheizung des Bauelements führen. Dabei können einige Bereiche des Bauelements stärker erhitzt werden als andere Bereiche des Bauelements. Beispiele für Bauelemente, bei denen eine solche inhomogene oder asymmetrische Temperaturaufheizung auftreten, sind PTC-Heizelemente und Einschaltstrombegrenzer mit einer NTC-Keramik.

Die inhomogene oder asymmetrische Temperaturaufheizung kann aufgrund der thermischen Ausdehnung des Bauelements zu hohen mechanischen Spannungen führen, da sich die stärker erhitzten Bereiche stärker ausdehnen als die Bereiche, die weniger stark erhitzt werden. Die mechanischen Spannungen können zu einem Ausfall oder einer Beschädigung des Bauelements führen. Beispielsweise könnten ein Verbindungsmaterial, eine Keramik und/oder eine Außenelektrode in Folge der mechanischen Spannungen brechen. Dabei kann durch den Bruch der elektrische Kontakt zwischen der Keramik und der Außenelektrode unterbrochen werden und die Funktionalität des Bauteils gestört werden.

Auch bei Bauelementen, bei denen es nicht infolge von inhomogener oder asymmetrischer Temperaturaufheizung zu mechanischen Spannungen kommt, können ähnliche mechanische Spannungen infolge von unterschiedlichen thermischen Ausdehnungskoeffizienten von verschiedenen Bestandteilen des Bauelementes entstehen. Dementsprechend besteht auch bei diesen Bauelementen die Gefahr einer Beschädigung bei übermäßiger Erhitzung.

US 2009/102599 A1 zeigt einen scheibenförmigen PTC Thermistor, der mit einem Lot an einem Substrat befestigt ist, wobei das Lot eine Schmelztemperatur aufweist, die geringer ist als die Curie Temperatur des PTC Thermistors.

Aufgabe der vorliegenden Erfindung ist es, ein verbessertes Bauelement anzugeben, das beispielsweise eine verringerte Wahrscheinlichkeit dafür aufweist, bei Erhitzung eine Beschädigung zu erleiden.

Die Aufgabe wird durch ein Bauelement gemäß Anspruch 1 gelöst. Vorteilhafte Ausgestaltungen des Bauelementes sind Gegenstand der abhängigen Ansprüche.

Es wird ein Bauelement vorgeschlagen, das einen Grundkörper und zumindest eine Außenelektrode aufweist. Die zumindest eine Außenelektrode ist durch ein Verbindungsmaterial an dem Grundkörper befestigt. Der Grundkörper und die Außenelektrode weisen unterschiedliche thermische Ausdehnungskoeffizienten auf, die eine kritische Temperatur festlegen, bei deren Überschreiten eine Verbindung des Grundkörpers und der Außenelektrode mechanische Spannungen erfährt, die zu Beschädigungen des Bauelementes führen. Das Verbindungsmaterial weist einen Schmelzpunkt auf, der geringer ist als die kritische Temperatur.

Dadurch, dass sich der Aggregatszustand des Verbindungsmaterials von fest zu flüssig ändern kann, bevor eine kritische Temperatur erreicht wird, kann ausgeschlossen werden, dass bei Erhitzen des Bauelements dieses auf die kritische Temperatur der Verbindung des Grundkörpers mit der zumindest einen Außenelektrode erhitzt wird und der Grundkörper und die Außenelektrode gleichzeitig durch das Verbindungsmaterial miteinander verbunden sind. Vielmehr wird das Verbindungsmaterial vor dem Erreichen der kritischen Temperatur schmelzen. Etwaige mechanische Spannungen, die beim Aufheizen aufgrund unterschiedlicher thermischer Ausdehnungskoeffizienten oder aufgrund eines asymmetrisch oder inhomogen verlaufenden Aufheizungsprozess entstehen könnten, können durch das Schmelzen des Verbindungsmaterials unmittelbar abgebaut werden. Der geringe Schmelzpunkt des Verbindungsmaterials kann dementsprechend sicherstellen, dass eine Beschädigung der Verbindung durch das Verbindungsmaterial bei Erreichen der kritischen Temperatur nicht auftreten kann, da die Verbindung durch das Verbindungsmaterial zu diesem Zeitpunkt nicht mehr bestehen kann. In seinem flüssigen Zustand kann das Verbindungsmaterial die zumindest eine Außenelektrode nicht mechanisch an dem Grundkörper befestigen.

Etwaige zerstörerische Spannungen können in dem Bauelement somit eliminiert werden. Das Verbindungsmaterial kann dazu ausgestaltet sein, sich nach einer Hitzephase in einer Abkühlphase wieder zu verfestigen und die Verbindung zwischen der zumindest einen Außenelektrode und dem Grundkörper wieder herzustellen.

Bei dem Bauelement kann es sich beispielsweise um ein keramisches Bauelement handeln. Bei dem Bauelement handelt es sich um ein elektronisches Bauelement. Bei dem Bauelement kann es sich um ein elektrisches Bauelement handeln. Bei dem Bauelement kann es sich um ein aktives oder passives Bauelement handeln. Das Bauelement kann ein keramisches Vielschichtbauelement sein. Alternativ kann das Bauelement eine einzige keramische Schicht aufweisen. Das Bauelement kann für eine Oberflächenmontage vorgesehen sein (SMD = Surface Mounted Device).

Insbesondere bei keramischen Bauelementen können eine Außenelektrode, die ein Metall aufweist oder aus einem Metall besteht, und ein Grundkörper, der ein keramisches Material aufweist, voneinander abweichende thermische Ausdehnungskoeffizienten aufweisen. Der Grundkörper des keramischen Bauelements kann dabei überwiegend aus einem keramischen Material bestehen. Die voneinander abweichenden thermischen Ausdehnungskoeffizienten können zu den oben erläuterten mechanischen Spannungen führen. Daher ist insbesondere bei einem keramischen Bauelement der Einsatz des Verbindungsmaterials mit einem Schmelzpunkt unter der kritischen Temperatur vorteilhaft.

Als "kritische Temperatur" kann hier die Temperatur bezeichnet werden, bei der eine Verbindung des Grundkörpers und der Außenelektrode mechanische Spannungen erfährt, die zu Beschädigungen des Bauelementes führen. Dabei können die mechanischen Spannungen durch unterschiedliche Ausdehnungen der Außenelektrode und des Grundkörpers verursacht werden. Die kritische Temperatur wird somit wesentlich von den thermischen Ausdehnungskoeffizienten der Außenelektrode und des Grundkörpers festgelegt, die wiederum von den Materialien der Außenelektrode und des Grundkörpers abhängen. Auch die Formen und die Dicken der Außenelektrode und des Grundkörpers sowie die Art der Verbindung können die kritische Temperatur beeinflussen. Bei der Festlegung der kritischen Temperatur der Verbindung der zumindest einen Außenelektrode mit dem Grundkörper kann unberücksichtigt bleiben, dass die Verbindung sich bei Überschreiten des Schmelzpunkts durch das Schmelzen des Verbindungsmaterial öffnen kann.

Das Verbindungsmaterial kann ein Lotmaterial sein. Dementsprechend können die Außenelektrode und der Grundkörper über eine Lotverbindung durch das Verbindungsmaterial miteinander verbunden sein. Lotverbindungen können eine zuverlässige elektrische Verbindung sowie eine zuverlässige mechanische Verbindung der beiden Verbindungspartner ausbilden.

Das Lotmaterial kann Zinn und Bismut aufweisen. Insbesondere kann das Lotmaterial aus Zinn und Bismut bestehen. Dabei kann das Lotmaterial einen Anteil zwischen 35 Gew.-% und 50 Gew.-% von Zinn und einen Anteil zwischen 50 Gew.-% bis 65 Gew.-% von Bismut aufweisen. Vorzugsweise liegt der Anteil von Zinn zwischen 40 und 45 Gew.-%. Vorzugsweise liegt der Anteil von Bismut zwischen 55 und 60 Gew.-%. Beispielsweise kann das Lotmaterial 42 Gew.-% Zinn und 58 Gew.-% Bismut aufweisen.

Ein Lotmaterial, das eine Mischung von Zinn und Bismut in den oben genannten Mischverhältnissen aufweist, ist gut als Verbindungsmaterial zwischen der zumindest einen Außenelektrode und dem Grundkörper geeignet. Das Lotmaterial kann aufgrund des Mischverhältnisses von Zinn und Bismut einen Schmelzpunkt aufweisen, der unterhalb üblicher kritischer Temperaturen von Bauelementen liegt.

Unterhalb einer Temperatur seines Schmelzpunktes kann das Lotmaterial eine zuverlässige elektrische und mechanische Verbindung der Außenelektrode mit dem Grundkörper herstellen. Wird das Lotmaterial auf eine Temperatur über dem Schmelzpunkt erhitzt, kann das Lotmaterial schnell schmelzen, so dass die Verbindung durch das Verbindungsmaterial schnell getrennt wird. Dadurch kann eine Gefahr einer mechanischen Beschädigung schnell ausgeräumt werden.

Der Schmelzpunkt des Verbindungsmaterials kann kleiner als 150 °C sein, vorzugsweise kleiner als 140 °C. Diese Temperaturen liegen unterhalb der üblichen kritischen Temperaturen für eine Verbindung einer Außenelektrode mit einem Grundkörper. Beispielsweise kann der Schmelzpunkt 138 °C betragen. Ein Schmelzpunkt von 138 °C ergibt sich beispielsweise für ein Verbindungsmaterial das ein Lotmaterial mit 42 Gew.-% Zinn und 58 Gew.-% Bismut ist.

Der Schmelzpunkt des Verbindungsmaterials kann größer als 100 °C sein, vorzugsweise größer als 120 °C. Ein Aufschmelzen des Verbindungsmaterials bei Temperaturen unter 100 °C oder unter 120 °C ist nicht erforderlich, da bei diesen Temperaturen keine mechanischen Spannungen zwischen dem Grundkörper und der zumindest einen Außenelektrode zu erwarten sind, die so groß sind, dass sie zu einer Beschädigung des Bauelementes führen könnten.

Der Grundkörper kann zumindest eine Elektrode aufweisen, die Silber aufweist. Die Elektrode kann aus Silber bestehen. Die Elektrode kann beispielsweise mittels eines Siebdruckverfahrens aufgebracht sein. Die Elektrode kann dünner sein als die Außenelektrode. Bei der Elektrode kann es sich um eine Metallisierung handeln, mittels der eine keramische Schicht des Grundkörpers elektrisch mit der zumindest einen Außenelektrode kontaktiert werden kann. Die zumindest eine Außenelektrode kann durch das Verbindungsmaterial an der zumindest einen Elektrode des Grundkörpers befestigt sein.

Der Grundkörper und die zumindest eine Außenelektrode werden durch eine Vorspannungseinheit aneinandergedrückt . Die Vorspannungseinheit kann dabei dazu ausgestaltet sein, den Grundkörper und die Außenelektrode elektrisch weiterhin zu kontaktieren, wenn das Verbindungsmaterial geschmolzen ist. Die Vorspannungseinheit kann auch eine mechanische Befestigung der Außenelektroden an dem Grundkörper bewirken. Die Vorspannungseinheit kann dabei die zumindest eine Außenelektrode derart an den Grundkörper befestigen, dass auch bei einer Erhitzung der Außenelektrode und des Grundkörpers auf eine Temperatur, die größer als die kritische Temperatur ist, keine Beschädigungen des Bauelementes auftreten. Beispielsweise kann die Vorspannungseinheit dazu ausgestaltet sein, Relativbewegungen zwischen der Außenelektrode und dem Grundkörper zu ermöglichen. Dabei kann die Vorspannungseinheit dazu ausgestaltet sein, nur Relativbewegungen zu erlauben, bei denen die Strecke, um die die zumindest eine Außenelektrode relativ zu dem Grundkörper bewegt wird, wesentlich kleiner ist als eine lateral Ausdehnung der Außenelektrode und des Grundkörpers. Beispielsweise kann die Strecke weniger als ein Hundertstel der lateralen Ausdehnung der Außenelektrode betragen. Eine derartig kleine Bewegungsamplitude kann ausreichen, um die mechanischen Spannungen abzubauen, und kann ferner klein genug sein, so dass die Außenelektrode und der Grundkörper elektrisch miteinander kontaktiert bleiben und aneinander mit einer hinreichend großen Fläche anliegen.

Die Vorspannungseinheit kann beispielsweise eine Feder aufweisen. Die Vorspannungseinheit kann eine Federkraft auf die zumindest eine Außenelektrode ausüben, über die die Außenelektrode gegen den Grundkörper gepresst werden kann.

Das Verbindungsmaterial kann auf einer Oberfläche des Grundkörpers angeordnet sein und mit der Oberfläche einen Benetzungswinkel einschließen, bei dem das Verbindungsmaterial in einem flüssigen Zustand zwischen dem Grundkörper und der Außenelektrode bleibt. Dementsprechend kann ausgeschlossen werden, dass das Verbindungsmaterial nach seinem Schmelzen aus dem Grundkörper herausfließt. Das Verbindungsmaterial kann nach einer Hitzephase immer noch an seiner Position zwischen Grundkörper und Außenelektrode sein und kann sich in einer späteren Abkühlphase verfestigen und dabei die Außenelektrode erneut am Grundkörper befestigen und mit diesem kontaktieren.

Das Verbindungsmaterial kann einen höheren spezifischen Widerstand als der Grundkörper und als die Außenelektrode aufweisen. Dementsprechend kann das Verbindungsmaterial sich stärker erwärmen als der Grundkörper und die Außenelektrode. Daher kann das Verbindungsmaterial seinen Schmelzpunkt erreichen, bevor der Grundkörper oder die Außenelektrode auf die kritische Temperatur erhitzt sind.

Die zumindest eine Außenelektrode kann Kupfer oder Invar oder einen Kupfer-Invar-Kupfer-Schichtaufbau aufweisen. Kupfer ist ein bewährtes robustes Material für Außenelektroden. Eine Kupfer-Invar-Verbindung weist einen thermischen Ausdehnungskoeffizienten auf, der ähnlich zu den thermischen Ausdehnungskoeffizienten des Grundkörpers sein kann. Da die Ausdehnungskoeffizienten einer Außenelektrode mit einer Kupfer-Invar Verbindung und eines Grundkörpers, der beispielsweise ein keramisches Material aufweist, einander ähnlich sind, treten mechanische Spannungen in geringerem Maße auf, so dass die kritische Temperatur höher liegen kann als bei einem Bauelement, das eine Außenelektrode aufweist, die aus Kupfer besteht.

Das Bauelement kann eine zweite Außenelektrode aufweisen, die durch das Verbindungsmaterial an dem Grundkörper befestigt ist. Die zweite Außenelektrode kann auf die gleiche Weise an dem Grundkörper befestigt sein wie die erste Außenelektrode. Auch die Verbindung der zweiten Außenelektrode mit dem Grundkörper kann bei Erreichen des Schmelzpunktes des Verbindungsmaterials aufschmelzen.

Das Bauelement kann ein Thermistor, ein Kondensator oder ein Varistor sein. Das Bauelement kann ein PTC-Heizelement oder ein Einschaltstrombegrenzer mit einer NTC-Keramik sein. Bei den letztgenannten Bauelementen sind inhomogene oder asymmetrische Aufheizungen nicht unüblich, sodass der Einsatz des Verbindungsmaterials mit einem Schmelzpunkt unter der kritischen Temperatur insbesondere bei diesen Bauelementen vorteilhaft ist.

Im Folgenden wird ein bevorzugtes Ausführungsbeispiel des Bauelementes anhand der Figur erläutert.

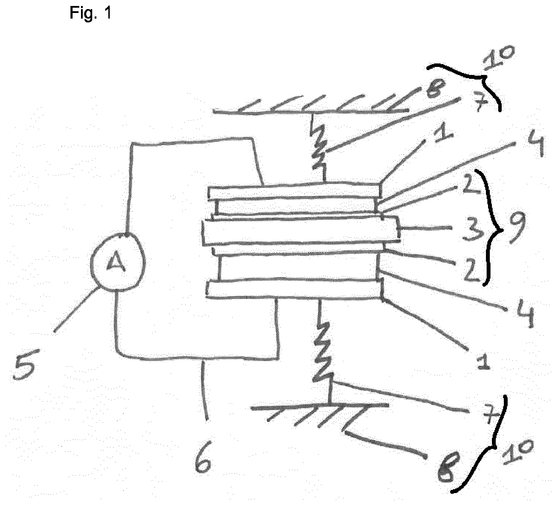

Figur 1 zeigt eine schematische Ansicht eines Bauelementes.

Figur 1 zeigt ein Bauelement. Bei dem Bauelement handelt es sich in dem hier gezeigten Ausführungsbeispiel um einen Thermistor, insbesondere um einen NTC-Thermistor.

Das Bauelement weist einen Grundkörper 9 auf, der eine Scheibe 3 aus einem NTC-Material aufweist. Ferner weist der Grundkörper 9 zwei Elektroden 2 auf. Die Elektroden 2 sind auf gegenüberliegenden Seiten der Scheibe 3 angeordnet. Die Elektroden 2 weisen Silber auf oder bestehen aus Silber. Die Elektroden 2 sind sehr dünn. Die Elektroden 2 können beispielsweise mittels eines Siebdruckverfahrens auf der Scheibe 2 aufgebracht worden sein. Die vorliegende Erfindung ist nicht auf den in Figur 1 gezeigten Grundkörper 9 beschränkt. Beispielsweise könnte der Grundkörper 9 auch einen Vielschichtaufbau aufweisen.

Zur elektrischen Kontaktierung des Bauelementes weist das Bauelement zwei Außenelektroden 1 auf. Die Außenelektroden 1 können Kupfer aufweisen oder aus Kupfer bestehen.

Eine erste Außenelektrode 1 ist durch ein Verbindungsmaterial 4 mit einer der Elektroden 2 des Grundkörpers 9 verbunden. Eine zweite Außenelektrode 1 ist durch das Verbindungsmaterial 4 mit der anderen Elektrode 2 des Grundkörpers 9 verbunden.

Bei dem Verbindungsmaterial 4 handelt es sich um ein Lotmaterial. Dementsprechend sind die Außenelektroden 1 durch eine Lotverbindung mit dem Grundkörper 9 verbunden. Bei dem Lotmaterial handelt es sich um eine Zinn-Bismut-Verbindung. Insbesondere kann das Lotmaterial Zinn mit 42 Gewicht-% und Bismut mit 58 Gewicht-% aufweisen. Das Lotmaterial kann einen Schmelzpunkt von 138 °C haben.

Die Außenelektroden 1 sind über Zuleitungen 6 mit einer Spannungsquelle 5 verbunden. Über die Spannungsquelle 5 kann eine Spannung zwischen den Außenelektroden 1 angelegt werden. Dementsprechend kann die Spannungsquelle 5 über die Außenelektroden 1 an das Bauelement eine Spannung angelegen.

Bei derartigen Bauelementen besteht die Gefahr einer Beschädigung des Bauelementes durch mechanische Spannungen, die bei Erwärmen des Bauelementes über einen kritische Temperatur hinaus auftreten können. Die Außenelektrode 1 und der Grundkörper 9 weisen voneinander abweichende thermische Ausdehnungskoeffizienten auf. Daraus ergibt sich für eine Verbindung der Außenelektroden 1 mit dem Grundkörper 9 die kritische Temperatur. Werden nun die Außenelektroden 1 und der Grundkörper 9 erhitzt, dehnen sie sich aufgrund ihrer unterschiedlichen thermischen Ausdehnungskoeffizienten unterschiedlich stark aus, sodass mechanische Spannungen entstehen. Als kritische Temperatur wird dabei die Temperatur definiert, bei der die mechanischen Spannungen, die an der Verbindung der Außenelektrode 1 mit dem Grundkörper 9 auftreten, so groß werden, dass es zu einer Beschädigung des Bauelementes kommt. Die Beschädigung kann beispielsweise in Form eines Bruchs auftreten.

Das hier verwendete Verbindungsmaterial 4 ist so gewählt, dass sein Schmelzpunkt unter der kritischen Temperatur der Verbindung des Grundkörpers 9 mit der Außenelektrode 1 liegt. Dementsprechend schmilzt das Verbindungsmaterial 4 bevor es zu einer Beschädigung des Bauelements durch eine übermäßige Erhitzung kommt. Etwaige mechanische Spannungen werden durch das Aufschmelzen des Verbindungsmaterials 4 unmittelbar abgebaut. Das Bauelement ist dementsprechend derart konstruiert, dass es nicht zu Beschädigungen in Folge von mechanischen Spannungen kommen kann, die durch eine Überhitzung über die kritische Temperatur des Bauelementes hinaus entstehen.

Das Bauelement weist ferner eine Vorspannungseinheit 10 auf. Die Vorspannungseinheit 10 stellt sicher, dass der Grundkörper 9 und die Außenelektroden 1 miteinander kontaktiert bleiben, wenn das Verbindungsmaterial 4 schmilzt.

Die Vorspannungseinheit 10 presst die Außenelektroden 1 gegen den Grundkörper 9.

Die Vorspannungseinheit 10 weist zwei Federn 7 und ein Auflager 8 auf. Das Auflager 8 umgibt das Bauelement oder besteht aus zwei Elementen, die auf gegenüberliegenden Seiten des Bauelements angeordnet sind.

Dabei ist eine erste Feder 7 auf der Seite des Grundkörpers 9 angeordnet, auf der die erste Außenelektrode 1 angeordnet ist. Die erste Feder 7 ist zwischen dem Auflager 8 und der ersten Außenelektrode 1 eingespannt. Die erste Feder 7 drückt mit einer Spannkraft die erste Außenelektrode 1 gegen den Grundkörper 9. Die zweite Feder 7 ist auf der gegenüberliegenden Seite des Grundkörpers 9 angeordnet, d.h. auf der Seite, auf der die zweite Außenelektrode 1 angeordnet ist. Die zweite Feder 7 ist zwischen dem Auflager 8 und der zweiten Außenelektrode 1 angeordnet. Die zweite Feder 7 drückt die zweite Außenelektrode 1 mit einer Spannkraft gegen der Grundkörper 9. Die von der ersten und der zweiten Feder 7 auf den Grundkörper 9 ausgeübten Spannkräfte wirken in entgegengesetzte Richtungen, so dass der Grundkörper 9 und die beiden Außenelektroden 1 zusammengedrückt werden. Schmilzt das Verbindungsmaterial 4, bleibt eine elektrische Kontaktierung und eine mechanische Verbindung der Außenelektroden 1 mit dem Grundkörper 9 bestehen, da die Vorspannungseinheit 10 sicherstellt, dass die Außenelektroden 1 gegen den Grundkörper 9 gedrückt werden.

Die Verbindungen der Außenelektroden 1 mit dem Grundkörper 9 sind derart ausgestaltet, dass das Verbindungsmaterial 4 auch nach dem Aufschmelzen der Verbindungen an seiner Position zwischen dem Grundkörper 9 und der jeweiligen Außenelektrode 1 bleibt. Um dieses zu erreichen kann ein Verbindungsmaterial 4 mit einem entsprechenden Benetzungswinkel gewählt werden. Der entsprechende Benetzungswinkel kann dabei im flüssigen Zustand des Verbindungsmaterials vorliegen. Durch eine geeignete Wahl des Benetzungswinkels wird sichergestellt, dass das Verbindungsmaterial 4 nicht aus dem Grundkörper 9 herausfließt. Dabei wird ein möglichst großer Benetzungswinkel gewählt.

Das Bauelement kann derart ausgestaltet sein, dass bei einer Erwärmung des Bauelementes das Verbindungsmaterial 4 schneller erwärmt wird als die Außenelektroden 1 und der Grundkörper 9. Insbesondere kann das Verbindungsmaterial 4 einen höheren spezifischen Widerstand aufweisen als die Außenelektroden 1 und der Grundkörper 9. Dementsprechend wird sichergestellt, dass das Verbindungsmaterial 4 auf eine Temperatur aufgeheizt wird, die größer ist als sein Schmelzpunkt, bevor die Außenelektroden 1 und der Grundkörper 9 auf die kritische Temperatur erwärmt werden und dabei aufgrund unterschiedlicher Ausdehnungskoeffizienten übermäßige mechanische Spannungen erleiden könnten.

Bei einer Abkühlung des Bauelementes wird das Verbindungsmaterial 4 bei Unterschreiten einer Verfestigungstemperatur wieder fest. Da das Verbindungsmaterial 4 in dem flüssigen Zustand an seiner Position zwischen Außenelektrode 1 und Grundkörper 9 bleibt, verbindet das Verbindungsmaterial 4 nach seiner Verfestigung die Außenelektroden 1 und den Grundkörper 9 wieder miteinander.

Da der Aggregatzustand des Verbindungsmaterials 4 zwischen dem Grundkörper 9 und den Außenelektroden 1 vor Erwärmung auf die kritische Temperatur wechselt und insbesondere das Verbindungsmaterial 4 flüssig wird, treten zerstörerische mechanische Spannungen in dem Bauelement nicht auf. Da das Verbindungsmaterial 4 nach einer Abkühlphase sich wieder verfestigt und die Außenelektrode 1 und den Grundkörper 9 mechanisch verbindet, wird eine gute mechanische und elektrische Verbindung erzeugt, die im nächsten Aufheizzyklus erneut schmelzen wird.

Handelt es sich bei dem Verbindungsmaterial 4 um ein Lotmaterial, können zudem durch das Flüssigwerden des Lotmaterials Alterungsmechanismen eliminiert werden, die andernfalls die Lebensdauer eines Bauelementes mit Lotverbindungen begrenzen könnten.

### Bezugszeichen

- 1: Außenelektrode
- 2: Elektrode
- 3: Scheibe
- 4: Verbindungsmaterial
- 5: Spannungsquelle
- 6: Zuleitung
- 7: Feder
- 8: Auflager
- 9: Grundkörper
- 10: Vorspannungseinheit

## Patentansprüche

1. Elektronisches Bauelement,
aufweisend einen Grundkörper (9) und zumindest eine Außenelektrode (1), die durch ein Verbindungsmaterial (4) an dem Grundkörper (9) befestigt ist,
wobei der Grundkörper (9) und die Außenelektrode (1) unterschiedliche thermische Ausdehnungskoeffizienten aufweisen, die eine kritische Temperatur festlegen, bei deren Überschreiten eine Verbindung des Grundkörpers (9) und der Außenelektrode (1) mechanische Spannungen erfährt, die zu einer Beschädigung des elektronischen Bauelements führen,
wobei das Verbindungsmaterial (4) einen Schmelzpunkt aufweist, der geringer ist als eine kritische Temperatur,
**dadurch gekennzeichnet, dass**
der Grundkörper (9) und die zumindest eine Außenelektrode (1) durch eine Vorspannungseinheit (10) aneinander gedrückt werden.

2. Elektronisches Bauelement gemäß Anspruch 1,
wobei das Verbindungsmaterial (4) ein Lotmaterial ist.

3. Elektronisches Bauelement gemäß Anspruch 2,
wobei das Lotmaterial Zinn und Bismut aufweist.

4. Elektronisches Bauelement gemäß der Ansprüche 2 oder 3, wobei das Lotmaterial Zinn mit einem Anteil zwischen 35 Gewicht-% und 50 Gewicht-% und Bismut mit einem Anteil von 50 Gewicht-% bis 65 Gewicht-% aufweist.

5. Elektronisches Bauelement gemäß einem der vorherigen Ansprüche,
wobei der Schmelzpunkt des Verbindungsmaterials (4) kleiner als 150 °C ist.

6. Elektronisches Bauelement gemäß einem der vorherigen Ansprüche,
wobei der Schmelzpunkt des Verbindungsmaterials (4) kleiner als 140 °C ist.

7. Elektronisches Bauelement gemäß einem der vorherigen Ansprüche,
wobei der Grundkörper (9) ein keramisches Material aufweist.

8. Elektronisches Bauelement gemäß einem der vorherigen Ansprüche,
wobei der Grundkörper (9) zumindest eine Elektrode (2) aufweist, die Silber aufweist.

9. Elektronisches Bauelement gemäß dem vorherigen Anspruch, wobei die zumindest eine Außenelektrode (1) durch das Verbindungsmaterial (4) an der zumindest eine Elektrode (2) des Grundkörpers (9) befestigt ist.

10. Elektronisches Bauelement gemäß einem der vorherigen Ansprüche,
wobei das Verbindungsmaterial (4) auf einer Oberfläche des Grundkörpers (9) angeordnet ist und mit der Oberfläche einen Benetzungswinkel einschließt, bei dem das Verbindungsmaterial (4) in einem flüssigen Zustand zwischen dem Grundkörper (9) und der Außenelektrode (1) bleibt.

11. Elektronisches Bauelement gemäß einem der vorherigen Ansprüche,
wobei das Verbindungsmaterial (4) einen höheren spezifischen Widerstand als der Grundkörper (9) und als die Außenelektrode (1) aufweist.

12. Elektronisches Bauelement gemäß einem der vorherigen Ansprüche,
wobei die zumindest eine Außenelektrode (1) Kupfer aufweist,
oder
wobei die zumindest eine Außenelektrode (1) Invar aufweist,
oder
wobei die zumindest eine Außenelektrode (1) einen Kupfer-Invar-Kupfer Schichtaufbau aufweist.

13. Elektronisches Bauelement gemäß einem der vorherigen Ansprüche,
wobei das elektronische Bauelement eine zweite Außenelektrode (1) aufweist, die durch das Verbindungsmaterials (4) an dem Grundkörper (9) befestigt ist.

14. Elektronisches Bauelement gemäß einem der vorherigen Ansprüche,
wobei das elektronische Bauelement ein Thermistor, ein Kondensator oder ein Varistor ist.

15. Elektronisches Bauelement gemäß einem der vorherigen Ansprüche,
wobei das elektronische Bauelement ein PTC Heizelement oder ein Einschaltstrombegrenzer mit einer NTC Keramik ist.

## Claims

1. An electronic component,
comprising a base body (9) and at least one outer electrode (1) which is attached to the base body (9) by a connecting material (4),
wherein the base body (9) and the outer electrode (1) have different thermal expansion coefficients which define a critical temperature above which a connection of the base body (9) and the outer electrode (1) undergoes mechanical stresses which lead to damage to the electronic component,
wherein the connecting material (4) has a melting point which is lower than a critical temperature, **characterized in that**
the base body (9) and the at least one outer electrode (1) are pressed together by a biasing unit (10).

2. The electronic component according to claim 1,
wherein the connecting material (4) is a solder material.

3. The electronic component according to claim 2,
wherein the solder material comprises tin and bismuth.

4. The electronic component according to claim 2 or 3, wherein the solder material comprises tin in a proportion of between 35% and 50% by weight and bismuth in a proportion of between 50% and 65% by weight.

5. The electronic component according to one of the preceding claims,
wherein the melting point of the connecting material (4) is less than 150°C.

6. The electronic component according to one of the preceding claims,
wherein the melting point of the connecting material (4) is less than 140°C.

7. The electronic component according to one of the preceding claims,
wherein the base body (9) comprises a ceramic material.

8. The electronic component according to one of the preceding claims,
wherein the base body (9) comprises at least one electrode (2) comprising silver.

9. The electronic component according to the previous claim,
wherein the at least one outer electrode (1) is attached to the at least one electrode (2) of the base body (9) by the connecting material (4).

10. The electronic component according to one of the preceding claims,
wherein the connecting material (4) is arranged on a surface of the base body (9) and encloses with the surface a wetting angle at which the connecting material (4) remains in a liquid state between the base body (9) and the outer electrode (1).

11. The electronic component according to one of the preceding claims,
wherein the connecting material (4) has a higher resistivity than the base body (9) and than the outer electrode (1).

12. The electronic component according to one of the preceding claims,
wherein the at least one outer electrode (1) comprises copper,
or
wherein the at least one outer electrode (1) comprises invar,
or
wherein the at least one outer electrode (1) comprises a copper-invar-copper layer structure.

13. The electronic component according to one of the preceding claims,
wherein the electronic component comprises a second outer electrode (1) which is attached to the base body (9) by the connecting material (4).

14. The electronic component according to one of the preceding claims,
wherein the electronic component is a thermistor, a capacitor or a varistor.

15. The electronic component according to one of the preceding claims,
wherein the electronic component is a PTC heating element or an inrush current limiter with an NTC ceramic.

## Revendications

1. Composant électronique,
présentant un corps de base (9) et au moins une électrode extérieure (1) qui est fixée au corps de base (9) par un matériau de liaison (4),
dans lequel le corps de base (9) et l'électrode extérieure (1) présentent différents coefficients de dilatation thermique qui définissent une température critique lors du dépassement de laquelle une liaison entre le corps de base (9) et l'électrode extérieure (1) subit des contraintes mécaniques qui conduisent à un endommagement du composant électronique,
dans lequel le matériau de liaison (4) présente un point de fusion qui est inférieur à une température critique,
**caractérisé en ce que** le corps de base (9) et ladite au moins une électrode extérieure (1) sont poussés l'un contre l'autre par une unité de précontrainte (10).

2. Composant électronique selon la revendication 1, dans lequel le matériau de liaison (4) est un matériau de brasage.

3. Composant électronique selon la revendication 2, dans lequel le matériau de brasage présente de l'étain et du bismuth.

4. Composant électronique selon les revendications 2 ou 3, dans lequel le matériau de brasage présente de l'étain dans une proportion comprise entre 35 % en poids et 50 % en poids et du bismuth dans une proportion de 50 % en poids à 65 % en poids.

5. Composant électronique selon l'une quelconque des revendications précédentes, dans lequel le point de fusion du matériau de liaison (4) est inférieur à 150 °C.

6. Composant électronique selon l'une quelconque des revendications précédentes, dans lequel le point de fusion du matériau de liaison (4) est inférieur à 140 °C.

7. Composant électronique selon l'une quelconque des revendications précédentes, dans lequel le corps de base (9) présente un matériau céramique.

8. Composant électronique selon l'une quelconque des revendications précédentes, dans lequel le corps de base (9) présente au moins une électrode (2) qui présente de l'argent.

9. Composant électronique selon la revendication précédente, dans lequel ladite au moins une électrode extérieure (1) est fixée à ladite au moins une électrode (2) du corps de base (9) par le matériau de liaison (4).

10. Composant électronique selon l'une quelconque des revendications précédentes, dans lequel le matériau de liaison (4) est disposé sur une surface du corps de base (9) et forme avec la surface un angle de mouillage auquel le matériau de liaison (4) reste dans un état liquide entre le corps de base (9) et l'électrode extérieure (1).

11. Composant électronique selon l'une quelconque des revendications précédentes, dans lequel le matériau de liaison (4) présente une résistance spécifique supérieure à celle du corps de base (9) et de l'électrode extérieure (1).

12. Composant électronique selon l'une quelconque des revendications précédentes,
dans lequel ladite au moins une électrode extérieure (1) présente du cuivre,
ou
dans lequel ladite au moins une électrode extérieure (1) présente de l'Invar,
ou
dans lequel ladite au moins une électrode extérieure (1) présente une structure de couche cuivre/Invar/cuivre.

13. Composant électronique selon l'une quelconque des revendications précédentes, dans lequel le composant électronique présente une deuxième électrode extérieure (1) qui est fixée au corps de base (9) par le matériau de liaison (4).

14. Composant électronique selon l'une quelconque des revendications précédentes, dans lequel le composant électronique est une thermistance, un condensateur ou une varistance.

15. Composant électronique selon l'une quelconque des revendications précédentes, dans lequel le composant électronique est un élément de chauffage CTP ou un limiteur de courant de démarrage pourvu d'une céramique CTN.
